# EUROPÄISCHE PATENTSCHRIFT

(11) **EP 1 279 910 B1**
(45) Veröffentlichungstag und Bekanntmachung des Hinweises auf die Patenterteilung: **30.08.2006**
(21) Anmeldenummer: 02016164.2
(22) Anmeldetag: 20.07.2002
(51) Int. Cl.: F25B 30/04, F25B 17/08

(54) **Verfahren zum Betrieb einer Adsorptionswärmepumpe**
Process for operating an adsorption heat pump
Procédé de fonctionnement d'une pompe à chaleur à absorption

(30) Priorität: 26.07.2001 DE 10137511; 13.08.2001 AT 12632001
(43) Veröffentlichungstag der Anmeldung: 29.01.2003
(73) Patentinhaber: Vaillant GmbH, 42859 Remscheid (DE)
(72) Erfinder: Heim, Johann-Ludwig, 42857 Remscheid (DE); Hocker, Thomas, Dr., 42857 Remscheid (DE); Lang, Rainer, Dr., 51067 Köln (DE); Marth, Frank, 56581 Melsbach (DE); Marx, Uwe, 51375 Leverkusen (DE); Prescha, Ralph, 42659 Solingen (DE); Wienen, Johann, 46359 Heiden (DE)
(74) Vertreter: Hocker, Thomas

(56) Entgegenhaltungen:
- DE-A- 3 700 707
- DE-A- 10 024 729
- DE-A- 10 038 636

## Beschreibung

Die Erfindung bezieht sich zunächst auf ein Verfahren gemäß dem Oberbegriff des unabhängigen Verfahrensanspruches.

Ein solches Verfahren ist aus DE-A-100 38 636 bekannt.

In Adsorptionswärmepumpen werden eine Wärmequelle im Gerät, oft ein konventioneller Brenner, und eine Umweltwärmequelle genutzt, um einen Heizkreislauf zu beheizen. Die Umweltwärmequelle wird genutzt, um in einem Verdampfer Kältemittel zu verdampfen, das in einem Adsorber adsorbiert, wodurch Adsorptionswärme freigesetzt wird. Diese Wärme geht auf einen Wärmeträger in einem Primärkreislauf über. Der Wärmeträger wird anschließend von der Wärmequelle im Gerät weiter erhitzt und gelangt in einen Desorber. In dem Desorber wird Wärmeenergie dazu benötigt, um Kältemittel zu desorbieren. Das Kältemittel kondensiert an einem Kondensator und gibt dabei Wärme ab. Diese Wärme ist für den Heizkreislauf bestimmt. Der Wärmeträger des Primärkreislaufs gibt nach Verlassen des Desorbers einen Teil seiner Wärme an den Heizkreislauf, um dann wieder in den Adsorber zu strömen.

Der Adsorptions- und Desorptionsprozess findet in der Regel bei Temperaturen zwischen 150 und 200°C statt. Soll die Wärmepumpe abgeschaltet werden, so ist zu beachten, dass solange der Adsorptionsprozess läuft, noch Wärme frei wird. Um eine hohe Energieausbeute zu erreichen, sollte diese Wärme genutzt werden. Ein abruptes Abschalten der Anlage würde zu einem heißen Adsorber, möglicherweise Überhitzungen und Wärmeverlusten führen.

Ziel der Erfindung ist es, diese Nachteile zu vermeiden und ein Verfahren der eingangs erwähnten Art vorzuschlagen, bei dem freiwerdende Wärmeenergie möglichst optimal genutzt wird.

Erfindungsgemäß wird dies bei einem Verfahren der eingangs erwähnten Art durch die kennzeichnenden Merkmale des unabhängigen Verfahrensanspruches erreicht.

Durch die vorgeschlagenen Maßnahmen wird erreicht, dass die Wärme, die sich im Primärkreislauf noch befindet beziehungsweise bei der Adsorption und Kondensation noch frei wird, auf den Heizkreislauf übertragen werden kann.

Gemäß den kennzeichnenden Merkmalen des Anspruchs 2 ergibt sich der Vorteil, dass die Pumpennachlaufphase dann beendet wird, wenn nur noch ein geringer Wärmeübergang stattfindet, was anhand geringer Temperaturdifferenzen am Heiznetzwärmeaustauscher feststellbar ist.

Während gemäß Anspruch 2 der Wärmeübergang im Primärkreislauf die Pumpennachlaufzeit bestimmt, wird gemäß Anspruch 3 der Wärmeübergang im Kondensatorkreislauf gemessen. Das desorbierte Kältemittel kondensiert an einem Kondensator und gibt Wärme ab. Ist diese Wärme gering, so ist dies ein Zeichen dafür, dass kaum noch Desorption stattfindet. Es ist prinzipiell auch möglich, den Kondensator ohne gesonderten Kondensatorkreislauf direkt in den Heiznetzkreislauf einzubinden.

Gemäß den Merkmalen des Anspruchs 4 wird die Pumpennachlaufzeit dann beendet, wenn auf der Heiznetzseite an dem oder den Heiznetzwärmeaustauschern kaum noch eine Temperaturerhöhung feststellbar ist.

Gemäß den Merkmalen des Anspruchs 5 wird bei Beladung eines Warmwasserspeichers die Wärmequelle dann abgeschaltet, wenn durch die Nachladung die Speichersolltemperatur erreicht werden kann.

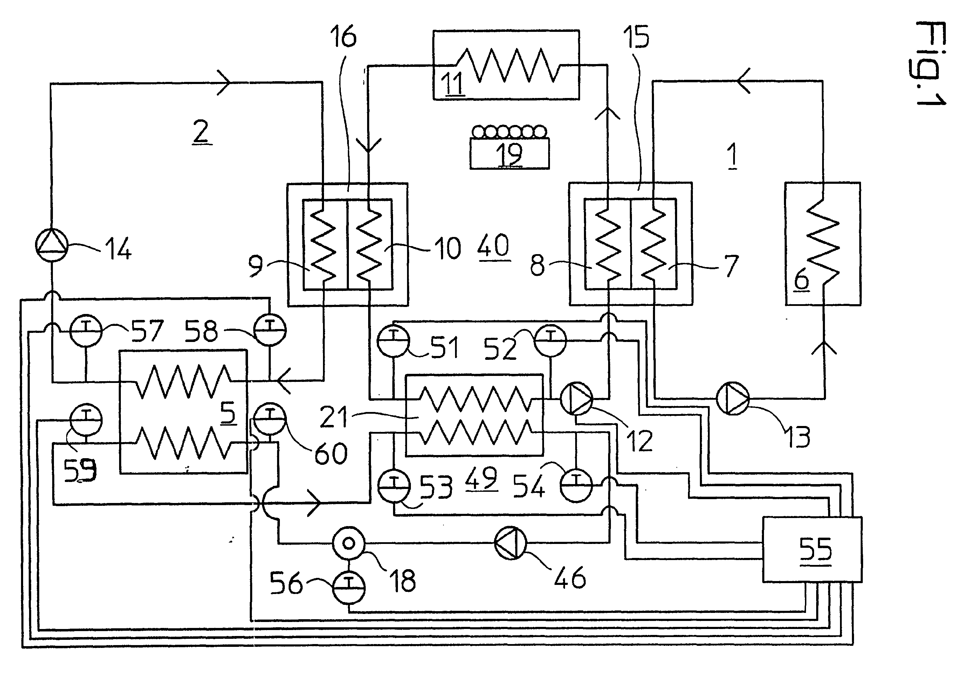

Ausführungsbeispiele der Erfindung werden im Folgenden anhand der Fig. 1 erläutert. Es zeigt

Fig. 1 den Aufbau und die Verschaltung einer erfindungsgemäßen Adsorptionswärmepumpe während der eigentlichen Arbeitsphase, in der in den Wärmepumpen-Modulen Wärme übertragen wird.

Eine Wärmepumpe gemäß Fig. 1 verfügt über einen Adsorber-Desorber-Kreislauf 40, in dem sich eine Wärmequelle in Form eines von einem Brenner 19 beheizten Primär-Wärmeaustauschers 11, ein Zeolith-Wärmeaustauscher 10, eine Umwälzpumpe 12, ein Heiznetzwärmeaustauscher 21 und ein weiterer Zeolith-Wärmeaustauscher 8, befinden, sowie ein Sole-Leitungssystem 1, das als Verdampferbereich arbeitet, in dem sich ein Kältemittelwärmeaustauscher 7, eine Umwälzpumpe 13 und eine Umweltwärmequelle 6 befinden und schließlich ein Kondensator-Kreislauf 2, in dem sich ein Kältemittelwärmeaustauscher 9, eine Umwälzpumpe 14 und ein Heiznetzwärmeaustauscher 5 befinden. Der Kältemittelwärmeaustauscher 9 und der Zeolith-Wärmeaustauscher 10 einerseits sowie der Kältemittelwärmeaustauscher 7 und der Zeolith-Wärmeaustauscher 8 andererseits sind jeweils als baugleiche Wärmepumpen-Module 16 und 15 aufgebaut. Die Zeolith-Wärmeaustauscher 8 bzw. 10 verfügen über Rippenrohre, die zwischen den Rippen mit Zeolithkugeln gefüllt sind. Die Wärmepumpen-Module 16 und 15 sind jeweils von einem Vakuumbehälter umfasst, in dem sich jeweils die Zeolith-Wärmeaustauscher 8 bzw. 10, der Kältemittelwärmeaustauscher 7 bzw. 9, ein Strahlungsschutz zwischen diesen beiden Wärmeaustauschern und das Kältemittel Wasser befinden. Im Warmwasserspeicher befindet sich ein Temperatursensor 56, der über eine Signalleitung mit einer Regelung 55 verbunden ist. Am Heiznetzwärmeaustauscher 21 befinden sich auf beiden Seiten sowohl eingangs-, als auch ausgangsseitig Temperatursensoren 51 bis 54, die ebenfalls mit der Regelung 55 verbunden sind. Gleiches gilt für den zweiten Heiznetzwärmeaustauscher 5 mit den Temperatursensoren 57 bis 60.

In dem in Fig. 1 dargestellten Betriebszustand arbeitet Zeolith-Wärmeaustauscher 10 als Desorber und der Zeolith-Wärmeaustauscher 8 als Adsorber, der Kältemittelwärmeaustauscher 7 als Verdampfer und der Kältemittelwärmeaustauscher 9 als Kondensator.

In diesem dargestellten Zustand wird das Wärmeträgermedium im Adsorber-Desorber-Kreislauf 40 im Primär-Wärmeaustauscher 11 von dem Brenner 19 erhitzt. Das heiße Wärmeträgermedium strömt in den Zeolith-Wärmeaustauscher 10, der als Desorber arbeitet. Die Zeolithkugeln des Zeolith-Wärmeaustauscher 10 sind zunächst mit Wasser gesättigt. Die zugeführte Wärme bewirkt, dass das Wasser desorbiert wird und somit den Zeolith-Wärmeaustauscher 10 verläßt. Der so entstehende Wasserdampf kondensiert im Kältemittelwärmeaustauscher 9, der als Kondensator arbeitet und gibt somit Wärme an den Kondensator-Kreislauf 2 ab. Im Heiznetzwärmeaustauscher 21 wird das Wärmeträgermedium des Adsorber-Desorber-Kreislauf 40 weiter abgekühlt und die Wärme auf einen Heizungskreislauf 49 abgegeben. Im Wärmepumpen-Modul 15 ist der Zeolith im Zeolith-Wärmeaustauscher 8, der als Adsorber arbeitet, zunächst relativ trocken. Dem Kältemittelwärmeaustauscher 7, der als Verdampfer arbeitet, wird Umgebungswärme zugeführt. Hierdurch wird Wasser, das sich um den Kältemittelwärmeaustauscher 7 (Verdampfer) befindet, verdunstet. Der so entstehende Wasserdampf gelangt zum Zeolith des Zeolith-Wärmeaustauschers 8, der als Adsorber arbeitet, wodurch der Zeolith sich erhitzt. Diese Wärme gibt der Zeolith-Wärmeaustauscher 8 an den Adsorber-Desorber-Kreislauf 40 ab.

Zum Abschalten des Systems wird zunächst der Brenner 19 abgeschaltet. Da sich weiterhin Wärme im Adsorber-Desorber-Kreislauf 40 befindet, findet sowohl weiterhin eine Desorption, als auch eine Adsorption statt. Daher müssen die Pumpen 12 und 46 weiterlaufen. Da Wärme über die beiden Heiznetzwärmeaustauscher 5 und 21 an den Heizungskreislauf 49 abgeführt wird, kühlt sich der Adsorber-Desorber-Kreislauf 40 langsam ab; auch die Adsorption und die Desorption nimmt ab.

Anhand der Temperaturdifferenzen an den Heiznetzwärmeaustauschern 5 und 21 läßt sich feststellen, ob noch viel Wärme übertragen wird. Ist die Temperaturdifferenz nur noch sehr klein, so muss gegebenenfalls mehr Energie für die Pumpen und die Regelung aufgebracht werden, als auf den Heizungskreislauf 49 übertragen wird. Da dies nicht sinnvoll ist, werden die Pumpen 12 und 46 früher abgeschaltet.

Wird ein Warmwasserspeicher 18 geladen, so muss der Brenner 19 abgeschaltet werden, ehe der Warmwasserspeicher 18 seine Solltemperatur erreicht. Die Abschalttemperatur, die kleiner als die Solltemperatur ist, ist abhängig von dem Warmwasserspeichervolumen und der Leistung der Anlage.

## Patentansprüche

1. Verfahren zum Betrieb einer Adsorptionswärmepumpe mit geschlossenem Adsorber-Desorber-Kreislauf (40) mit mindestens zwei Wärmepumpen-Modulen (15, 16), bestehend jeweils aus einem Adsorber/Desorber, vorzugsweise einem Zeolith-Wärmeaustauscher (8, 10), und einem Kältemittel-Wärmeaustauscher (7, 9), einem von einer Wärmequelle (19) beaufschlagten und mit dieser in Verbindung stehenden Primär-Wärmeaustauscher (11), einer Umwälzpumpe (12), einer Umweltwärmequelle (6), mindestens einem Heiznetzwärmeaustauscher (5, 21) und einem Heizungskreislauf (49) mit eigener Umwälzpumpe (46), **dadurch gekennzeichnet, dass** bei einer Abschaltung des Systems zunächst die Wärmequelle (19) abgeschaltet wird, während die Umwälzpumpe (12) im Adsorber-Desorber-Kreislauf (40) und die Umwälzpumpe (46) im Heizungskreislauf (49) weiterhin für eine bestimmte Periode weiterlaufen.

2. Verfahren zum Betrieb einer Adsorptionswärmepumpe gemäß Anspruch 1, **dadurch gekennzeichnet, dass** die Zeitperiode endet, sobald die Temperaturdifferenz zwischen der Rück- und Vorlauftemperatur des Heiznetzwärmeaustauschers (21) auf der Seite des Adsorber-Desorber-Kreislaufes (40) einen bestimmten Betrag unterschreitet.

3. Verfahren zum Betrieb einer Adsorptionswärmepumpe gemäß Anspruch 1, **dadurch gekennzeichnet, dass** die Zeitperiode endet, sobald die Temperaturdifferenz zwischen der Rück- und Vorlauftemperatur des Heiznetzwärmeaustauschers (5) auf der Seite des Kondensator-Kreislaufes (2) einen bestimmten Betrag unterschreitet.

4. Verfahren zum Betrieb einer Adsorptionswärmepumpe gemäß Anspruch 1, **dadurch gekennzeichnet, dass** die Zeitperiode endet, sobald die Temperaturdifferenz zwischen der Vor- und Rücklauftemperatur mindestens eines Heiznetzwärmeaustauschers (5, 21) auf der Seite des Heizungs-Kreislaufes (49) einen bestimmten Betrag unterschreitet.

5. Verfahren zum Betrieb einer Adsorptionswärmepumpe gemäß Anspruch 1, **dadurch gekennzeichnet, dass** bei Ladung eines Warmwasserspeichers (18) im Heizungskreislauf (49) die Wärmequelle (19) abgeschaltet wird, sobald die Temperatur des Warmwasserspeichers (18) eine Temperatur (Tₛₒₗₗ-ΔT), die um eine definierte Temperaturdifferenz ΔT kleiner ist als die Speichersolltemperatur Tₛₒₗₗ, überschreitet.

## Claims

1. A process for the operation of an adsorption heat pump with a closed adsorber/desorber circuit (40) having at least two heat pump modules (15, 16), each comprising an adsorber/desorber, preferably a zeolite heat exchanger (8, 10), and a refrigerant heat exchanger (7, 9), further a primary heat exchanger (11) heated by and connected with a heat source (19), a circulation pump (12), an environmental heat source (6), at least one heating system heat exchanger (5, 21) and a heating circuit (49) with a circulation pump of its own **characterised in that**, when the system is switched off, first the heat source (19) is switched off, while the circulation pump (12) in the adsorber/desorber circuit (40) and the circulation pump (46) in the heating circuit (49) continue to run for a certain period of time.

2. A process for the operation of an adsorption heat pump as claimed in Claim 1, **characterised in that** the period of time ends as soon as the temperature difference between the return temperature and the feed water temperature of the heating system heat exchanger (21) on the side of the adsorber/desorber circuit (40) falls short of a certain value.

3. A process for the operation of an adsorption heat pump as claimed in Claim 1, **characterised in that** the period of time ends as soon as the temperature difference between the return temperature and the feed water temperature of the heating system heat exchanger (5) on the side of the condenser circuit (2) falls short of a certain value.

4. A process for the operation of an adsorption heat pump as claimed in Claim 1, **characterised in that** the period of time ends as soon as the temperature difference between the feed water temperature and the return temperature of at least one heating system heat exchanger (5, 21) on the side of the heating circuit (49) falls short of a certain value.

5. A process for the operation of an adsorption heat pump as claimed in Claim 1, **characterised in that** in heating a hot water tank (18) in the heating circuit (49) the heat source (19) is shut off as soon as the temperature of the hot water tank (18) exceeds a temperature (Tₛₑₜₚ-ΔT) which is smaller by a defined temperature difference ΔT than the tank setpoint temperature Tₛₑₜₚ.

## Revendications

1. Procédé déterminant la marche d'une pompe à chaleur à adsorption avec circuit adsorbant/désorbant (40) avec au moins deux modules de themopompe (15, 16) comprenant chacun un adsorbant/désorbant, de préférence un échangeur de chaleur à zéolite (8, 10) et un échangeur de chaleur à frigorigène (7, 9), un échangeur de chaleur primaire (11) alimenté par une source calorifique (19) et communiquant avec elle, une pompe de circulation (12), une source de chaleur extérieure (6), au moins un échangeur de chaleur de circuit de chauffage (5, 21) et un circuit de chauffage (49) avec pompe de circulation (46), procédé **caractérisé par le fait que**, en cas d'arrêt du système, la source calorifique (19)est arrêtée d'abord, tandis que la pompe de circulation (12) dans le circuit adsorbant/désorbant (40) et la pompe de circulation (46) dans le circuit de chauffage (49) continuent à marcher pendant un période déterminée.

2. Procédé déterminant la marche d'une pompe à chaleur à adsorption suivant la revendication 1, **caractérisé par le fait que** la période se termine dès que la différence entre la température de retour et la température d'alimentation de l'échangeur de chaleur de circuit de chauffage (21) est inférieure à une valeur déterminée relative au circuit adsorbant/désorbant (40).

3. Procédé déterminant la marche d'une pompe à chaleur à adsorption suivant la revendication 1, **caractérisé par le fait que** la période se termine dès que la différence entre la température de retour et la température d'alimentation de l'échangeur de chaleur de circuit de chauffage (5) relative au circuit de condensateur (2) est inférieure à une valeur déterminée.

4. Procédé déterminant la marche d'une pompe à chaleur à adsorption suivant la revendication 1, **caractérisé par le fait que** la période se termine dès que la différence entre la température d'alimentation et la température de retour d'au moins un échangeur de chaleur de circuit de chauffage (5, 21) relative au circuit de chauffage (49) est inférieure à une valeur déterminée.

5. Procédé déterminant la marche d'une pompe à chaleur à adsorption suivant la revendication 1, **caractérisé par le fait qu'**au moment du chargement d'un accumulateur d'eau chaude (18) dans le circuit de chauffage (49), la source calorifique (19) est mise hors circuit dès que la température de l'accumulateur d'eau chaude (18) dépasse une température (T_{cons}-ΔT), qui est inférieure d'une différence de température (ΔT) à la température de consigne T_{cons} de l'accumulateur.
